# EUROPEAN PATENT APPLICATION

(11) **EP 3 048 770 A1**
(43) Date of publication of application: **27.07.2016**
(21) Application number: 15787885.1
(22) Date of filing: 14.04.2015
(51) Int. Cl.: H04L 29/06

(54) **METHOD, APPARATUS AND SYSTEM FOR DETERMINING TARGET USER FOR BUSINESS STRATEGY**

(30) Priority: 28.11.2014 CN 201410710010
(71) Applicant: Huawei Technologies Co. Ltd., Shenzhen, Guangdong 518129 (CN)
(72) Inventor: LIU, Dong, Shenzhen Guangdong 518129 (CN); WANG, Yunpeng, Shenzhen Guangdong 518129 (CN)
(74) Representative: Gill Jennings & Every LLP
(86) International application number: PCT/CN2015/076538
(87) International publication number: WO 2016/082428

(57) **Abstract**

The present invention discloses a method for determining a target user for a service policy, where the method is used to determine the target user to which the service policy is oriented, from users of a first network. The method includes: analyzing aggregated information according to a pre-configured service policy keyword to determine target user information corresponding to the service policy keyword, where the aggregated information includes a first correspondence between user information of the users of the first network and service content, where the service content includes service content of the users of the first network, in the second network; and outputting the target user information, where the target user information is used to indicate the target user to which the service policy is oriented. By using the method for determining a target user for a service policy according to an embodiment of the present invention, the target user to which the service policy is oriented may be determined accurately.

## Description

### CROSS-REFERENCE TO RELATED APPLICATIONS

This application claims priority to Chinese Patent Application No. 201410710010.4, filed with the Chinese Patent Office on November 28, 2014 and entitled "METHOD, APPARATUS, AND SYSTEM FOR DETERMINING TARGET USER FOR SERVICE POLICY", which is incorporated herein by reference in its entirety.

### TECHNICAL FIELD

The present invention relates to the field of computer technologies, and in particular, to a method for determining a target user for a service policy, a method and an apparatus for information aggregation, and a system.

### BACKGROUND

With development of the mobile Internet, social networking sites or social applications have become indispensable communications tools for the life of people. Massive network texts include information about interest, relationships, emotions, and the like of users. Such free but valuable information has attracted attention of Internet operators and other data mining teams, but no great value can be realized independently due to characteristics of the information such as limitations and virtual accounts.

Conventional telecommunications operators have accumulated a large amount of real-name user information, such as names, phone numbers, and locations. However, due to impact of the Internet in recent years, advantages of the operators in aspects of basic communications services and value-added services are being diminished continually, and the operators are gradually degenerated to a network pipeline role. The operators urgently need to reduce churn of users in time, and seek for a breakthrough of new services to grab back the market. Therefore, when defining a service policy, the conventional telecommunications operators need to master a trend of service use of users in time and accurately determine a target user to which the service policy is oriented.

### SUMMARY

To solve the problem that a telecommunications operator cannot accurately determine a target user to which a service policy is oriented in the prior art, embodiments of the present invention provide a method for determining a target user for a service policy, which may acquire a trend of service use of users in time and accurately determine the target user to which the service policy is oriented. The embodiments of the present invention further provide a corresponding apparatus and a system.

A first aspect of the present invention provides a method for determining a target user for a service policy, where the method is used to determine the target user to which the service policy is oriented, from users of a first network, and the method includes:
analyzing aggregated information according to a pre-configured service policy keyword to determine target user information corresponding to the service policy keyword, where the aggregated information includes a first correspondence between user information of the users of the first network and service content, where the service content includes service content of the users of the first network, in the second network; and
outputting the target user information, where the target user information is used to indicate the target user to which the service policy is oriented.

With reference to the first aspect, in a first possible implementation manner, the analyzing aggregated information according to a pre-configured service policy keyword to determine target user information corresponding to the service policy keyword specifically includes:
finding service content that matches the service policy keyword, in the service content of the second network; and
determining, according to the first correspondence and the service content that matches the service policy keyword, that user information of users of the first network corresponding to the service policy keyword is the target user information.

With reference to the first aspect, in a second possible implementation manner, before the analyzing aggregated information according to a pre-configured service policy keyword to determine target user information corresponding to the service policy keyword, the method further includes:
acquiring scope information of the target user information; and
the analyzing aggregated information according to a pre-configured service policy keyword to determine target user information corresponding to the service policy keyword includes:
   analyzing, according to the service policy keyword, aggregated information in a scope indicated by the scope information, to determine the target user information that falls within the indicated scope and corresponds to the service policy keyword.

With reference to the first possible implementation manner of the first aspect, in a third possible implementation manner, before the analyzing aggregated information according to a pre-configured service policy keyword to determine target user information corresponding to the service policy keyword, the method further includes:
acquiring scope information of the target user information;
the finding service content that matches the service policy keyword, in the service content of the second network, specifically includes:
   finding the service content that matches the service policy keyword, in the service content of the second network indicated by the scope information; and
   the determining, according to the first correspondence and the service content that matches the service policy keyword, that user information of users of the first network corresponding to the service policy keyword is the target user information, specifically includes:
      determining, according to the first correspondence and the service content that matches the service policy keyword, that user information of users of the first network that falls within a scope indicated by the scope information and corresponds to the service policy keyword is the target user information.

With reference to the first aspect, or any one of the first to third possible implementation manners of the first aspect, in a fourth possible implementation manner, the user information of the users of the first network includes user network identities, and a correspondence between the user network identities and the user information of the users of the first network is a second correspondence, and the method further includes:
establishing, based on analysis of access requests initiated by the users of the first network, a third correspondence between the user network identities of the users of the first network and the service content requested by the users of the first network; and
aggregating the second correspondence and the third correspondence according to the user network identities to obtain the first correspondence.

With reference to the fourth possible implementation manner of the first aspect, in a fifth possible implementation manner, the establishing, based on analysis of access requests initiated by the users of the first network, a third correspondence between the user network identities of the users of the first network and the service content requested by the users of the first network, specifically includes:
acquiring, according to the service access requests, the user network identities of the users of the first network and service identities carried in the service access requests;
acquiring, according to the service identities, service content corresponding to the service identities; and
establishing the third correspondence between the user network identities of the users of the first network who initiate the service access requests and the service content corresponding to the service identities.

With reference to the fifth possible implementation manner of the first aspect, in a sixth possible implementation manner, the user information of the users of the first network includes basic information of the users of the first network and relationship information between the users of the first network and other users in the first network, and
the second correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network;
the establishing a third correspondence between the user network identities of the users of the first network and the service content requested by the users of the first network specifically includes:
extracting, from the service content, basic information of users of the second network, relationship information between the users of the second network and other users in the second network, and service information of the users of the second network; and
adding the user network identity of each user of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the third correspondence in a form of the second network adjacency table; and
the aggregating the second correspondence and the third correspondence according to the user network identities to obtain the first correspondence specifically includes:
combining, according to the user network identities, the second components and the third components of the first network adjacency table and the second network adjacency table separately to obtain the first correspondence in a form of an adjacency table.

That the user information of the users of the first network includes basic information of the users of the first network and relationship information between the users of the first network and other users in the first network is not only applicable to the sixth possible implementation manner of the first aspect, but also applicable to the first aspect and any one of the first to fifth possible implementation manners of the first aspect.

A second aspect of the present invention provides a method for information aggregation, where user information of the users of the first network includes user network identities, and a correspondence between the user network identities and the user information of the users of the first network is a first correspondence, and the method includes:
establishing, based on analysis of access requests initiated by the users of the first network, a second correspondence between the user network identities of the users of the first network and service content requested by the users of the first network, where the service content includes service content of the users of the first network, in the second network; and
aggregating the first correspondence and the second correspondence according to the user network identities to obtain a third correspondence between the user information of the users of the first network and the service content, where the third correspondence is aggregate information.

With reference to the second aspect, in a first possible implementation manner, the establishing, based on analysis of access requests initiated by the users of the first network, a second correspondence between the user network identities of the users of the first network and the service content requested by the users of the first network, specifically includes:
acquiring, according to the service access requests, the user network identities of the users of the first network and service identities carried in the service access requests;
acquiring, according to the service identities, service content corresponding to the service identities; and
establishing the second correspondence between the user network identities of the users of the first network who initiate the service access requests and the service content corresponding to the service identities.

With reference to the first possible implementation manner of the second aspect, in a second possible implementation manner, the user information of the users of the first network includes basic information of the users of the first network and relationship information between the users of the first network and other users in the first network, and
the first correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network;
the establishing the second correspondence between the user network identities of the users of the first network who initiate the service access requests and the service content corresponding to the service identities specifically includes:
extracting, from the service content, basic information of users of the second network, relationship information between the users of the second network and other users in the second network, and service information of the users of the second network; and
adding the user network identities of the users of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the second correspondence in a form of the second network adjacency table; and
the aggregating the first correspondence and the second correspondence according to the user network identities to obtain a third correspondence between the user information of the users of the first network and the service content specifically includes:
combining, according to the user network identities, the second components and the third components of the first network adjacency table and the second network adjacency table separately to obtain the third correspondence in a form of an adjacency table.

A third aspect of the present invention provides an apparatus for determining a target user for a service policy, where the apparatus is used to determine the target user to which the service policy is oriented, from users of a first network, and the apparatus includes:
a determining unit, configured to analyze aggregated information according to a pre-configured service policy keyword to determine target user information corresponding to the service policy keyword, where the aggregated information includes a first correspondence between user information of the users of the first network and service content, where the service content includes service content of the users of the first network, in the second network; and
an outputting unit, configured to output the target user information determined by the determining unit, where the target user information is used to indicate the target user to which the service policy is oriented.

With reference to the third aspect, in a first possible implementation manner,
the determining unit is specifically configured to find service content that matches the service policy keyword, in the service content of the second network, and determine, according to the first correspondence and the service content that matches the service policy keyword, that user information of users of the first network corresponding to the service policy keyword is the target user information.

With reference to the third aspect, in a second possible implementation manner, the apparatus further includes an acquiring unit, where:
the acquiring unit is configured to acquire scope information of the target user information; and
the determining unit is specifically configured to analyze, according to the service policy keyword, aggregated information in a scope indicated by the scope information acquired by the acquiring unit, to determine the target user information that falls within the indicated scope and corresponds to the service policy keyword.

With reference to the first possible implementation manner of the third aspect, in a third possible implementation manner, the apparatus further includes an acquiring unit, where:
the acquiring unit is configured to acquire scope information of the target user information; and
the determining unit is specifically configured to find the service content that matches the service policy keyword, in the service content of the second network indicated by the scope information, and determine, according to the first correspondence and the service content that matches the service policy keyword, that user information of users of the first network that falls within a scope indicated by the scope information and corresponds to the service policy keyword is the target user information.

With reference to the third aspect, or any one of the first to third possible implementation manners of the third aspect, in a fourth possible implementation manner, the apparatus further includes:
an establishing unit, configured to establish, based on analysis of access requests initiated by the users of the first network, a third correspondence between user network identities of the users of the first network and the service content requested by the users of the first network; and
an aggregating unit, configured to: when the user information of the users of the first network includes the user network identities, and a correspondence between the user network identities and the user information of the users of the first network is a second correspondence, aggregate, according to the user network identities, the second correspondence and the third correspondence that is established by the establishing unit to obtain the first correspondence.

With reference to the fourth possible implementation manner of the third aspect, in a fifth possible implementation manner, the establishing unit includes:
a first acquiring subunit, configured to acquire, according to the service access requests, the user network identities of the users of the first network and service identities carried in the service access requests;
a second acquiring subunit, configured to acquire, according to the service identities acquired by the first acquiring subunit, service content corresponding to the service identities; and
an establishing subunit, configured to establish the third correspondence between the user network identities that are acquired by the first acquiring subunit and of the users of the first network who initiate the service access requests, and the service content that is acquired by the second acquiring subunit and corresponding to the service identities.

With reference to the fifth possible implementation manner of the third aspect, in a sixth possible implementation manner,
the establishing subunit is specifically configured to extract, from the service content, basic information of users of the second network, relationship information between the users of the second network and other users in the second network, and service information of the users of the second network, add the user network identity of each user of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the third correspondence in a form of the second network adjacency table; and
the aggregating unit is specifically configured to: when the user information of the users of the first network includes basic information of the users of the first network and the relationship information between the users of the first network and other users in the first network, and the second correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the first correspondence in a form of an adjacency table.

A fourth aspect of the present invention provides an apparatus for information aggregation, including:
an establishing unit, configured to establish, based on analysis of access requests initiated by the users of the first network, a second correspondence between user network identities of the users of the first network and service content requested by the users of the first network, where the service content includes service content of the users of the first network, in the second network; and
an aggregating unit, configured to: when user information of the users of the first network includes the user network identities, and a correspondence between the user network identities and the user information of the users of the first network is a first correspondence, aggregate, according to the user network identities, the first correspondence and the second correspondence that is established by the establishing unit to obtain a third correspondence between the user information of the users of the first network and the service content, where the third correspondence is aggregate information.

With reference to the fourth aspect, in a first possible implementation manner, the establishing unit includes:
a first acquiring subunit, configured to acquire, according to the service access requests, the user network identities of the users of the first network and service identities carried in the service access requests;
a second acquiring subunit, configured to acquire, according to the service identities acquired by the first acquiring subunit, service content corresponding to the service identities; and
an establishing subunit, configured to establish the second correspondence between the user network identities that are acquired by the first acquiring subunit and of the users of the first network who initiate the service access requests, and the service content that is acquired by the second acquiring subunit and corresponding to the service identities.

With reference to the first possible implementation manner of the fourth aspect, in a second possible implementation manner, the establishing subunit is specifically configured to extract, from the service content, basic information of users of the second network, relationship information between the users of the second network and other users in the second network, and service information of the users of the second network, add the user network identities of the users of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the second correspondence in a form of the second network adjacency table; and
the aggregating unit is specifically configured to: when the user information of the users of the first network includes basic information of the users of the first network and the relationship information between the users of the first network and other users in the first network, and the first correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the third correspondence in a form of an adjacency table.

In the embodiments of the present invention, aggregated information including user information of users of a first network and service content of a second network is analyzed, where the service content includes service content of the users of the first network, in the second network, and a target user to which a service policy is oriented is determined from the users of the first network. Thereby, the target user to which the service policy is oriented may be determined accurately.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of an embodiment of a method for information aggregation according to an embodiment of the present invention;
FIG. 2 is a schematic diagram of an embodiment of a method for determining a target user for a service policy according to an embodiment of the present invention;
FIG. 3 is a schematic diagram of an embodiment of a manner of storing aggregated information according to an embodiment of the present invention;
FIG. 4 is a schematic diagram of another embodiment of a method for information aggregation according to an embodiment of the present invention;
FIG. 5 is a schematic diagram of an embodiment of determining a target user for a service policy according to an embodiment of the present invention;
FIG. 6 is a schematic diagram of another embodiment of determining a target user for a service policy according to an embodiment of the present invention;
FIG. 7 is a schematic diagram of another embodiment of an apparatus for determining a target user for a service policy according to an embodiment of the present invention;
FIG. 8 is a schematic diagram of another embodiment of an apparatus for determining a target user for a service policy according to an embodiment of the present invention;
FIG. 9 is a schematic diagram of an embodiment of an apparatus for information aggregation according to an embodiment of the present invention;
FIG. 10 is a schematic diagram of another embodiment of an apparatus for information aggregation according to an embodiment of the present invention;
FIG. 11 is a schematic diagram of another embodiment of an apparatus for determining a target user for a service policy according to an embodiment of the present invention; and
FIG. 12 is a schematic diagram of another embodiment of an apparatus for information aggregation according to an embodiment of the present invention.

### DESCRIPTION OF EMBODIMENTS

Embodiments of the present invention provide a method for determining a target user for a service policy, which may acquire a trend of service use of users in time and accurately determine the target user to which the service policy is oriented. Embodiments of the present invention further provide a corresponding apparatus and a system. Detailed descriptions are hereinafter provided separately.

To help a person skilled in the art better understand the solutions of the present invention, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

In the embodiments of the present invention, a first network may be a telecommunications network, and a second network may be a social network. Certainly, there are no excessive limitations in the embodiments of the present invention, and solutions that may implement processes of the embodiments of the present invention between other networks also fall within the protection scope of the embodiments of the present invention.

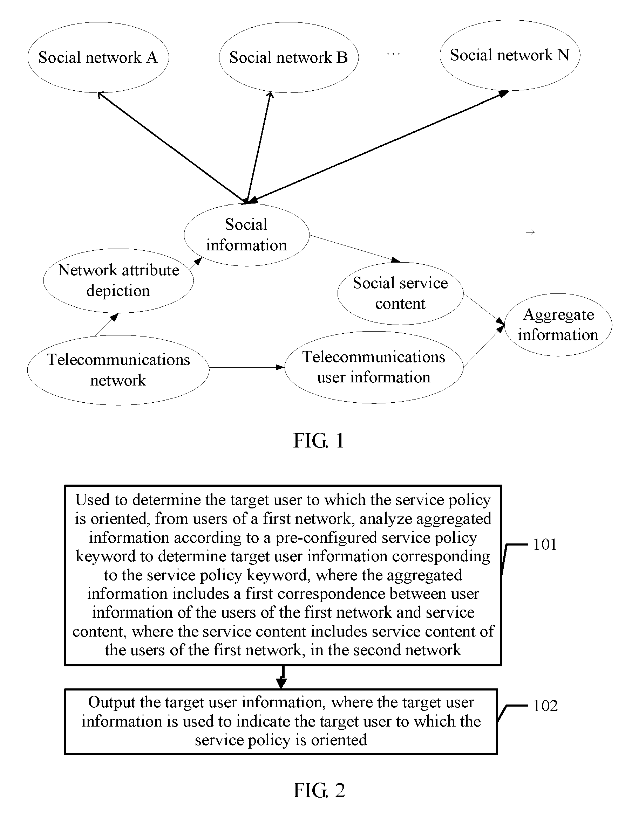

A process of information aggregation between a telecommunications network and a social network in an embodiment of the present invention may be understood with reference to FIG. 1. As shown in FIG. 1, user information of the telecommunications network is extracted from the telecommunications network. The user information of the telecommunications network may include basic information of users of the telecommunications network, for example, information such as names, ages, locations, genders, and phone numbers of users. The user information of the telecommunications network may further include relationship information between users in the telecommunications network, for example, information such as frequent contacts. Thereby, telecommunications user information is created. Social information may be extracted from social network A, social network B, ..., social network N by using a network attribute characterization technology, and thereby social service content is created. Then the user information of the telecommunications network and the social service content of the social networks are aggregated, and aggregated information is obtained.

In the embodiment of the present invention, network attribute characterization is to perform analysis and characterize attributes of network access activities of users on a telecommunications side, including but not limited to analysis and characterization of nicknames of users in networks, frequently accessed target websites, network e-mail addresses, and the like. User network identities are important attributes for associating users in a process of aggregating two networks. The user network identities include but are not limited to international mobile equipment identities (International Mobile Equipment Identities, IMEIs) of user terminals, mobile phone numbers of users, and the like. In a process of analyzing and characterizing social network information, users in an area may be selected, and with respect to social networks that are frequently accessed by these users respectively, social information including but not limited to text information such as a buddy list and latest posts is acquired; deep mining is performed on the acquired text information to extract further information such as a relationship network, user interest, and emotion orientation and form final social service content; and the service content of the social networks and telecommunications user information are aggregated to form aggregate information.

After aggregation of information of the telecommunications network and social networks, a target user may be determined for a service policy based on the aggregate information, and further, the target user to which the service policy is oriented is determined.

A user sets a user scope to be analyzed, for example, selects users in a city for creating or updating aggregate information.

According to a service requirement, the user sets an analysis type, for example, identification of important users and analysis of user emotions, and outputs an analysis result. The user makes a corresponding service decision according to the analysis result.

For example, an operator launches many 4G mobile phone purchase contract packages, but the intensity and scope of promotion are limited if promotion is performed only at the operator's official website. An account manager wishes to perform promotion by telephone manually, and therefore it is necessary to find potential users who have purchase intention. The account manager specifies a scope of analysis, for example, a province or a city, and keywords related to a mobile phone purchase contract, and by analyzing aggregate information, may find that there are users who have preferences in this aspect in this scope, and even find a user group specially discussing this topic. Therefore, if promotion is performed for this part of potential users, a success rate may be increased greatly.

For another example, signals of an operator in an area are very weak, or a competitor in this area launches more preferential packages to solicit users, and this situation causes churn of some users. By analyzing aggregate information, an account manager finds that users in this area have many negative emotion events with respect to the company of the account manager, and possible churn of these users may be foreseen. In this case, a retention measure may be taken to avoid user churn, for example, a signal base station is maintained, or more preferential services are provided for regular users.

Referring to FIG. 2, an embodiment of a method for determining a target user for a service policy is provided by an embodiment of the present invention, where the method is used to determine the target user to which the service policy is oriented, from users of a first network, and the method includes:
101. Analyze aggregated information according to a pre-configured service policy keyword to determine target user information corresponding to the service policy keyword, where the aggregated information includes a first correspondence between user information of the users of the first network and service content, where the service content includes service content of the users of the first network, in the second network.
   The service policy keyword may be a word related to a service policy to be specified, for example, 4G service or weak network signal of an operator.
102. Output the target user information, where the target user information is used to indicate the target user to which the service policy is oriented.

A method in the embodiment of the present invention is used to determine the target user to which the service policy is oriented, from users of a first network. The method includes: analyzing aggregated information according to a pre-configured service policy keyword to determine target user information corresponding to the service policy keyword, where the aggregated information includes a first correspondence between user information of the users of the first network and service content, where the service content includes service content of the users of the first network, in the second network; and outputting the target user information, where the target user information is used to indicate the target user to which the service policy is oriented. In comparison with the prior art in which a telecommunications operator cannot master a trend of service use of users in time, in the method for determining a target user for a service policy according to the embodiment of the present invention, aggregated information including user information of users of a first network and service content of a second network is analyzed, where the service content includes service content of the users of the first network, in the second network, and the target user to which the service policy is oriented is determined from the users of the first network, and thereby the target user to which the service policy is oriented may be determined accurately.

Optionally, on a basis of the embodiment corresponding to FIG. 2, in a first optional embodiment of the method for determining a target user for a service policy according to the embodiment of the present invention,
the analyzing aggregated information according to a pre-configured service policy keyword to determine target user information corresponding to the service policy keyword may specifically include:
finding service content that matches the service policy keyword, in the service content of the second network; and
determining, according to the first correspondence and the service content that matches the service policy keyword, that user information of users of the first network corresponding to the service policy keyword is the target user information.

In the embodiment of the present invention, content of the aggregated information may be understood with reference to Table 1. Certainly, a representation form of the aggregated information is not limited to Table 1.

**Table 1: First correspondence**

| **User information of users of the first network** | **Service content of the second network** |
|---|---|
| Zhang San, user in Shenzhen, 189xxxxxxx0 | 4G service, strong network signal |
| Li Si, user in Shenzhen, 189xxxxxxx1 | 4G service, strong network signal |
| Wang Wu, user in Huizhou, 189xxxxxxx2 | 4G service, strong network signal |
| Mao Dou, user in Shenzhen, 189xxxxxxx3 | 3G service, weak network signal |
| Wang Hong, user in Shenzhen, 189xxxxxxx4 | 4G service, strong network signal |
| Li li, user in Guangzhou, 189xxxxxxx5 | 3G service, weak network signal |
| Li Qi, user in Shenzhen, 189xxxxxxx6 | 4G service, strong network signal |

Certainly, only several examples are used for description herein, and actually, because of a huge amount of data in the network, the service content of the second network is also not limited to the 4G service and 3G service. Herein, the 4G service and 3G service are used as only examples to describe the process of determining, by using the aggregate information, the target user information corresponding to the service policy keyword. In the embodiment of the present invention, when the aggregated information is used, for the content in Table 1, if the keyword 4G service is entered, the following target users are found in Table 1: Zhang San, Li Si, Wang Wu, Wang Hong, and Li Qi, and therefore, promotion may be performed for these users pertinently during service promotion to increase the success rate.

Optionally, on a basis of the embodiment corresponding to FIG. 2, in a second optional embodiment of the method for determining a target user for a service policy according to the embodiment of the present invention,
before the analyzing aggregated information according to a pre-configured service policy keyword to determine target user information corresponding to the service policy keyword, the method may further include:
acquiring scope information of the target user information; and
the analyzing aggregated information according to a pre-configured service policy keyword to determine target user information corresponding to the service policy keyword may include:
   analyzing, according to the service policy keyword, aggregated information in a scope indicated by the scope information, to determine the target user information that falls within the indicated scope and corresponds to the service policy keyword.

In the embodiment of the present invention, if only users in Shenzhen need to be analyzed, after "Shenzhen" is acquired, content as shown in Table 2 may be provided for a user.

**Table 2: First correspondence in a scope of Shenzhen**

| **User information of users of the first network** | **Service content of the second network** |
|---|---|
| Zhang San, user in Shenzhen, 189xxxxxxx0 | 4G service, strong network signal |
| Li Si, user in Shenzhen, 189xxxxxxx1 | 4G service, strong network signal |
| Mao Dou, user in Shenzhen, 189xxxxxxx3 | 3G service, weak network signal |
| Wang Hong, user in Shenzhen, 189xxxxxxx4 | 4G service, strong network signal |
| Li Qi, user in Shenzhen, 189xxxxxxx6 | 4G service, strong network signal |

Therefore, for content in Table 2, if the keyword 4G service is entered, the following target users are found in Table 2: Zhang San, Li Si, Wang Hong, and Li Qi, and therefore, promotion may be performed for these users pertinently during service promotion to increase the success rate.

Optionally, on a basis of the first optional embodiment, in a third optional embodiment of the method for determining a target user for a service policy according to the embodiment of the present invention, before the analyzing aggregated information according to a pre-configured service policy keyword to determine target user information corresponding to the service policy keyword, the method may further include:
acquiring scope information of the target user information;
the finding service content that matches the service policy keyword, in the service content of the second network, may specifically include:
   finding the service content that matches the service policy keyword, in the service content of the second network indicated by the scope information; and
   the determining, according to the first correspondence and the service content that matches the service policy keyword, that user information of users of the first network corresponding to the service policy keyword is the target user information, may specifically include:
      determining, according to the first correspondence and the service content that matches the service policy keyword, that user information of users of the first network that falls within a scope indicated by the scope information and corresponds to the service policy keyword is the target user information.

Optionally, on a basis of the embodiment corresponding to FIG. 2, or the first or second or third optional embodiment, in a fourth optional embodiment of the method for determining a target user for a service policy according to the embodiment of the present invention, the user information of the users of the first network includes user network identities, and a correspondence between the user network identities and the user information of the users of the first network is a second correspondence, and the method further includes:
establishing, based on analysis of access requests initiated by the users of the first network, a third correspondence between the user network identities of the users of the first network and the service content requested by the users of the first network; and
aggregating the second correspondence and the third correspondence according to the user network identities to obtain the first correspondence.

In the embodiment of the present invention, mobile phone numbers, namely, identities of subscriber identity modules (Subscriber Identity Modules, SIMs), are used as examples of user identities of the users of the first network. In a telecommunications network, the identity of a SIM card is unique. A user registered with the telecommunications network has one or more phone numbers, where each phone number corresponds to registration information of the user, for example, user information such as a name, a location, and frequent contacts. Therefore, a second correspondence between the phone numbers and the user information of users in the first network exists. When users access web pages, social networking sites, or e-mail boxes by using mobile phones, a correspondence may be established between the phone numbers and addresses of the web pages, addresses of the social networking sites, or e-mail addresses. By using a web crawler technology, service content in these addresses of the web pages, addresses of the social networking sites, or e-mail addresses may be crawled. By analyzing the content, service content of the users in the second network may be determined, and thereby a third correspondence between the phone numbers and the service content of the second network is established.

After both the second correspondence and the third correspondence are determined, information of the two networks may be aggregated based on unified phone numbers, and a first correspondence including the user information of the users of the first network and the service content of the users of the first network, in the second network, is formed.

Optionally, on a basis of the fourth optional embodiment, in a fifth optional embodiment of the method for determining a target user for a service policy according to the embodiment of the present invention, the establishing, based on analysis of access requests initiated by the users of the first network, a third correspondence between the user network identities of the users of the first network and the service content requested by the users of the first network, may specifically include:
acquiring, according to the service access requests, the user network identities of the users of the first network and service identities carried in the service access requests;
acquiring, according to the service identities, service content corresponding to the service identities; and
establishing the third correspondence between the user network identities of the users of the first network who initiate the service access requests and the service content corresponding to the service identities.

In the embodiment of the present invention, the service identities may be addresses of web pages, nicknames of social networking sites, addresses of social networking sites, e-mail addresses, and the like. By using the web crawler technology, service content in these addresses of the web pages, addresses of the social networking sites, or e-mail addresses may be crawled. By analyzing the content, service content of the users in the second network may be determined, and thereby the third correspondence between the phone numbers and the service content of the second network is established.

Optionally, on a basis of the fifth optional embodiment, in a sixth optional embodiment of the method for determining a target user for a service policy according to the embodiment of the present invention, the user information of the users of the first network includes basic information of the users of the first network and relationship information between the users of the first network and other users in the first network, and
the second correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network;
the establishing a third correspondence between the user network identities of the users of the first network and the service content requested by the users of the first network specifically includes:
extracting, from the service content, basic information of users of the second network, relationship information between the users of the second network and other users in the second network, and service information of the users of the second network; and
adding the user network identity of each user of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the third correspondence in a form of the second network adjacency table; and
the aggregating the second correspondence and the third correspondence according to the user network identities to obtain the first correspondence specifically includes:
combining, according to the user network identities, the second components and the third components of the first network adjacency table and the second network adjacency table separately to obtain the first correspondence in a form of an adjacency table.

In the embodiment of the present invention, the telecommunications operator has a huge quantity of users, which is at least one million even if divided according to geographic areas. In addition, it is necessary to establish a relationship network, which not only needs to include relationship information of users, but also needs to include attributes of users, for example, contact methods and interest. For such massive information, a high-performance access solution is needed to implement high-efficiency integration of two networks.

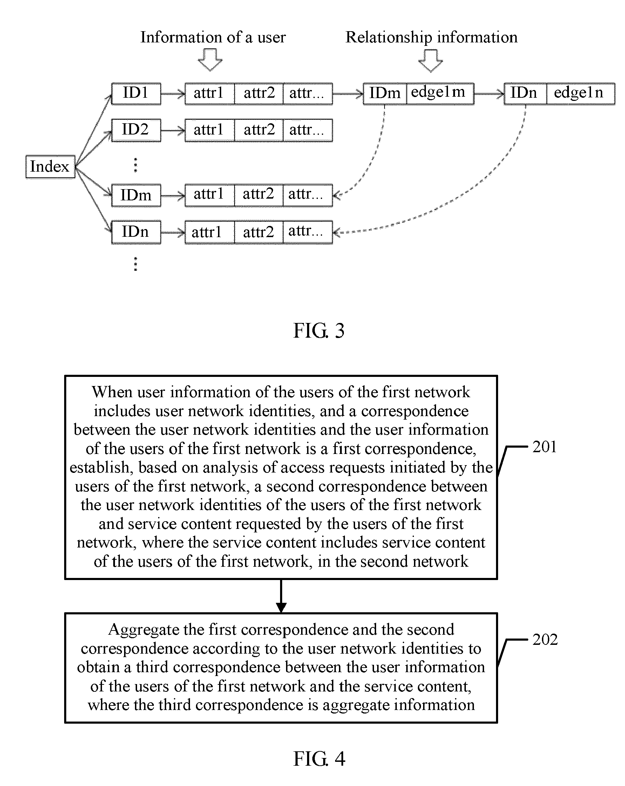

FIG. 3 shows a manner of storing aggregated information used in the present invention, an index-based adjacency table.

Each user record is distinguished by using a user network identity. A front end implements a fast search of users by using an indexing technology, for example, hash indexing.

Each user record includes two parts of information: an attribute of a user and a relationship between users. The former part is information of the user, for example, attr1 and attr2 in FIG. 3. The latter part is relationship information between users. Each piece of "relationship information" is composed of a buddy ID reference and a relationship attribute. For example, in FIG. 3, a relationship exists between a user ID1 and a user IDm, and their relationship attributes such as a relationship type and an extent of intimacy are stored in an edgelm, while information of the user IDm is stored in a link table of the IDm.

This storage manner of the adjacency table based on a mixture of indexes, node attributes, and edges facilitates the search of a single user and fast extraction and updating of a user relationship, while saving data storage space. On this basis, a telecommunications relationship subnet and a social relationship subnet are established separately, and then the two subnets may be efficiently merged into a final integrated relationship network.

Both the second correspondence and the third correspondence may be established based on the form of an adjacency table shown in FIG. 3. Then when the two correspondences are aggregated into the first correspondence, the aggregation is performed according to the form of an adjacency table shown in FIG. 3, and the final first correspondence is formed.

Referring to FIG. 4, an embodiment of a method for information aggregation is provided by an embodiment of the present invention, where user information of the users of the first network includes user network identities, where a correspondence between the user network identities and the user information of the users of the first network is a first correspondence, and the method includes:
201. Establish, based on analysis of access requests initiated by the users of the first network, a second correspondence between the user network identities of the users of the first network and service content requested by the users of the first network, where the service content includes service content of the users of the first network, in the second network.
202. Aggregate the first correspondence and the second correspondence according to the user network identities to obtain a third correspondence between the user information of the users of the first network and the service content, where the third correspondence is aggregate information.

In the embodiment of the present invention, mobile phone numbers, namely, identities of subscriber identity modules (Subscriber Identity Modules, SIMs), are used as examples of user identities of the users of the first network. In a telecommunications network, the identity of a SIM card is unique. A user registered with the telecommunications network has one or more phone numbers, where each phone number corresponds to registration information of the user, for example, user information such as a name, a location, and frequent contacts. Therefore, a second correspondence between the phone numbers and the user information of users in the first network is established. When users access web pages, social networking sites, or e-mail boxes by using mobile phones, a correspondence may be established between the phone numbers and addresses of the web pages, addresses of the social networking sites, or e-mail addresses. By using a web crawler technology, service content in these addresses of the web pages, addresses of the social networking sites, or e-mail addresses may be crawled. By analyzing the content, service content of the users in the second network may be determined, and thereby a third correspondence between the phone numbers and the service content of the second network is established.

After both the second correspondence and the third correspondence are established, information of the two networks may be aggregated based on unified phone numbers, and a first correspondence including the user information of the users of the first network and the service content of the users of the first network, in the second network, is formed.

In the embodiment of the present invention, user information of the users of the first network includes user network identities, where a correspondence between the user network identities and the user information of the users of the first network is a first correspondence; based on analysis of access requests initiated by the users of the first network, a second correspondence between the user network identities of the users of the first network and service content requested by the users of the first network is established, where the service content includes service content of the users of the first network, in the second network; and the first correspondence and the second correspondence are aggregated according to the user network identities to obtain a third correspondence between the user information of the users of the first network and the service content, where the third correspondence is aggregate information. In comparison with the prior art in which information interworking between networks cannot be performed, in the method for information aggregation according to the embodiment of the present invention, the user information of the first network and the service content of the second network may be aggregated to form aggregate information, and thereby information interworking between the two networks is implemented.

Optionally, on a basis of the embodiment corresponding to FIG. 4, in a first optional embodiment of the method for information aggregation according to the embodiment of the present invention,
the establishing, based on analysis of access requests initiated by the users of the first network, a second correspondence between the user network identities of the users of the first network and the service content requested by the users of the first network, specifically includes:
acquiring, according to the service access requests, the user network identities of the users of the first network and service identities carried in the service access requests;
acquiring, according to the service identities, service content corresponding to the service identities; and
establishing the second correspondence between the user network identities of the users of the first network who initiate the service access requests and the service content corresponding to the service identities.

In the embodiment of the present invention, the service identities may be addresses of web pages, nicknames of social networking sites, addresses of social networking sites, e-mail addresses, and the like. By using the web crawler technology, service content in these addresses of the web pages, addresses of the social networking sites, or e-mail addresses may be crawled. By analyzing the content, service content of the users in the second network may be determined, and thereby the third correspondence between the phone numbers and the service content of the second network is established.

Optionally, on a basis of the first optional embodiment of the method for information aggregation, in a second optional embodiment of the method for information aggregation according to the embodiment of the present invention, the user information of the users of the first network includes basic information of the users of the first network and relationship information between the users of the first network and other users in the first network, and
the first correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network;
the establishing the second correspondence between the user network identities of the users of the first network who initiate the service access requests and the service content corresponding to the service identities may specifically include:
extracting, from the service content, basic information of users of the second network, relationship information between the users of the second network and other users in the second network, and service information of the users of the second network; and
adding the user network identities of the users of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the second correspondence in a form of the second network adjacency table; and
the aggregating the first correspondence and the second correspondence according to the user network identities to obtain a third correspondence between the user information of the users of the first network and the service content may specifically include:
   combining, according to the user network identities, the second components and the third components of the first network adjacency table and the second network adjacency table separately to obtain the third correspondence in a form of an adjacency table.

In the embodiment of the present invention, the telecommunications operator has a huge quantity of users, which is at least one million even if divided according to geographic areas. In addition, it is necessary to establish a relationship network, which not only needs to include relationship information of users, but also needs to include attributes of users, for example, contact methods and interest. For such massive information, a high-performance access solution is needed to implement high-efficiency integration of two networks.

FIG. 3 shows a manner of storing aggregated information used in the present invention, an index-based adjacency table.

Each user record is distinguished by using a user network identity. A front end implements a fast search of users by using an indexing technology, for example, hash indexing.

Each user record includes two parts of information: an attribute of a user and a relationship between users. The former part is information of the user, for example, attr1 and attr2 in FIG. 3. The latter part is relationship information between users. Each piece of "relationship information" is composed of a buddy ID reference and a relationship attribute. For example, in FIG. 3, a relationship exists between a user ID1 and a user IDm, and their relationship attributes such as a relationship type and an extent of intimacy are stored in an edgelm, while information of the user IDm is stored in an adjacency table of the IDm.

This storage manner of the adjacency table based on a mixture of indexes, node attributes, and edges facilitates the search of a single user and fast extraction and updating of a user relationship, while saving data storage space. On this basis, a telecommunications relationship subnet and a social relationship subnet are established separately, and then the two subnets may be efficiently merged into a final integrated relationship network.

Both the second correspondence and the third correspondence may be established based on the form of an adjacency table shown in FIG. 3. Then when the two correspondences are aggregated into the first correspondence, the aggregation is performed according to the form of an adjacency table shown in FIG. 3, and the final first correspondence is formed.

It should be noted that, the apparatus for determining a target user for a service policy and the apparatus for information aggregation according to the embodiments of the present invention may specifically be one server, or one cloud host in a cloud computing system, where the cloud host may be a virtual machine running on a physical machine. Specific implementation of the apparatus for determining a target user for a service policy and the apparatus for information aggregation may be understood with reference to the method embodiments of the present invention.

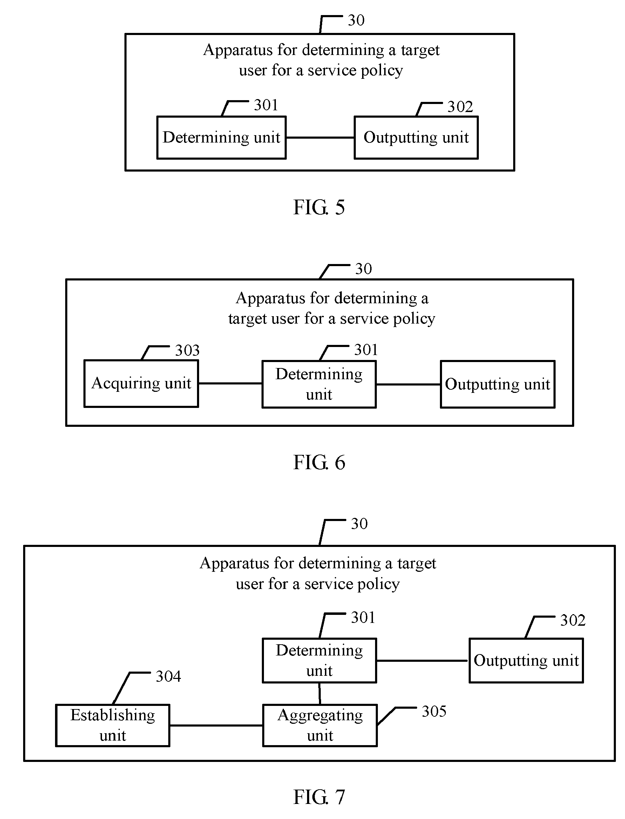

Referring to FIG. 5, an embodiment of an apparatus 30 for determining a target user for a service policy is provided by an embodiment of the present invention, where the apparatus is used to determine the target user to which the service policy is oriented, from users of a first network, and the apparatus includes:
a determining unit 301, configured to analyze aggregated information according to a pre-configured service policy keyword to determine target user information corresponding to the service policy keyword, where the aggregated information includes a first correspondence between user information of the users of the first network and service content, where the service content includes service content of the users of the first network, in the second network; and
an outputting unit 302, configured to output the target user information determined by the determining unit 301, where the target user information is used to indicate the target user to which the service policy is oriented.

In an apparatus provided by the embodiment of the present invention and used to determine the target user to which the service policy is oriented, from users of a first network, a determining unit 301 analyzes aggregated information according to a pre-configured service policy keyword to determine target user information corresponding to the service policy keyword, where the aggregated information includes a first correspondence between user information of the users of the first network and service content, where the service content includes service content of the users of the first network, in the second network; and an outputting unit 302 outputs the target user information determined by the determining unit 301, where the target user information is used to indicate the target user to which the service policy is oriented.

In comparison with the prior art in which a telecommunications operator cannot master a trend of service use of users in time, the apparatus for determining a target user for a service policy according to the embodiment of the present invention may master a trend of service use of users in the first network according to the service content of the second network, and thereby accurately determine the target user for the service policy.

Optionally, on a basis of the embodiment corresponding to FIG. 5, in a first optional embodiment of the apparatus 30 for determining a target user for a service policy according to the embodiment of the present invention,
the determining unit 301 is specifically configured to find service content that matches the service policy keyword, in the service content of the second network, and determine, according to the first correspondence and the service content that matches the service policy keyword, that user information of users of the first network corresponding to the service policy keyword is the target user information.

Optionally, on a basis of the embodiment corresponding to FIG. 5 or the first optional embodiment, referring to FIG. 6, in a second optional embodiment of the apparatus 30 for determining a target user for a service policy according to the embodiment of the present invention, the apparatus further includes an acquiring unit 303, where:
the acquiring unit 303 is configured to acquire scope information of the target user information; and
the determining unit 301 is specifically configured to analyze, according to the service policy keyword, aggregated information in a scope indicated by the scope information acquired by the acquiring unit 303, to determine the target user information that falls within the indicated scope and corresponds to the service policy keyword.

Optionally, on a basis of the embodiment corresponding to FIG. 5 or the first or second optional embodiment, in a third optional embodiment of the apparatus 30 for determining a target user for a service policy according to the embodiment of the present invention, referring to FIG. 7, the apparatus 30 further includes:
an establishing unit 304, configured to establish, based on analysis of access requests initiated by the users of the first network, a third correspondence between user network identities of the users of the first network and the service content requested by the users of the first network; and
an aggregating unit 305, configured to: when the user information of the users of the first network includes the user network identities, and a correspondence between the user network identities and the user information of the users of the first network is a second correspondence, aggregate, according to the user network identities, the second correspondence and the third correspondence that is established by the establishing unit 304 to obtain the first correspondence.

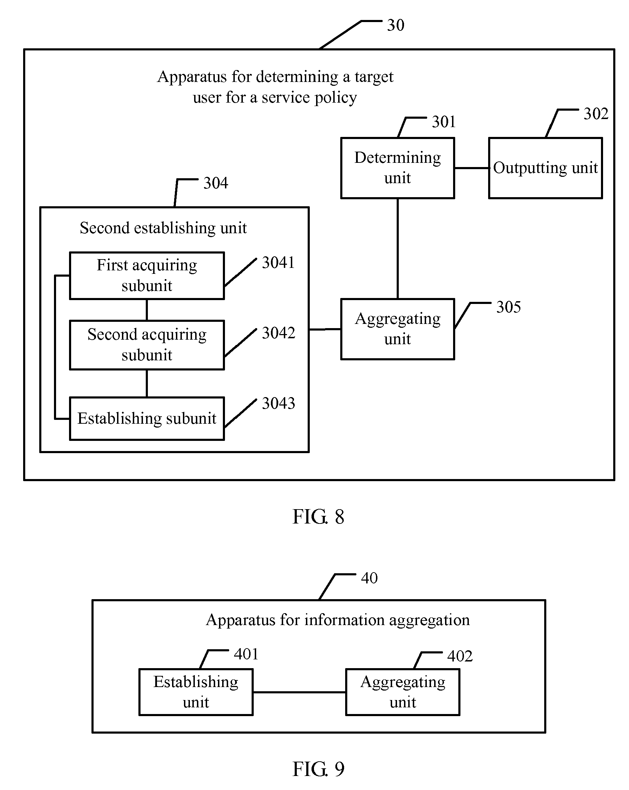

Optionally, on a basis of the third optional embodiment corresponding to FIG. 7, in a fourth optional embodiment of the apparatus 30 for determining a target user for a service policy according to the embodiment of the present invention, referring to FIG. 8, the establishing unit 304 includes:
a first acquiring subunit 3041, configured to acquire, according to the service access requests, the user network identities of the users of the first network and service identities carried in the service access requests;
a second acquiring subunit 3042, configured to acquire, according to the service identities acquired by the first acquiring subunit 3041, service content corresponding to the service identities; and
an establishing subunit 3043, configured to establish the third correspondence between the user network identities that are acquired by the first acquiring subunit 3042, of the users of the first network who initiate the service access requests, and the service content that is acquired by the second acquiring subunit and corresponding to the service identities.

Optionally, on a basis of the fourth embodiment corresponding to FIG. 8, in a fifth optional embodiment of the apparatus 30 for determining a target user for a service policy according to the embodiment of the present invention,
the establishing subunit 3043 is specifically configured to extract, from the service content, basic information of users of the second network, relationship information between the users of the second network and other users in the second network, and service information of the users of the second network, add the user network identity of each user of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the third correspondence in a form of the second network adjacency table; and
the aggregating unit 305 is specifically configured to: when the user information of the users of the first network includes basic information of the users of the first network and the relationship information between the users of the first network and other users in the first network, and the second correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the first correspondence in a form of an adjacency table.

Referring to FIG. 9, an embodiment of an apparatus 40 for information aggregation according to an embodiment of the present invention includes:
an establishing unit 401, configured to establish, based on analysis of access requests initiated by the users of the first network, a second correspondence between user network identities of the users of the first network and service content requested by the users of the first network, where the service content includes service content of the users of the first network, in the second network; and
an aggregating unit 402, configured to: when user information of the users of the first network includes the user network identities, and a correspondence between the user network identities and the user information of the users of the first network is a first correspondence, aggregate, according to the user network identities, the first correspondence and the second correspondence that is established by the establishing unit 401 to obtain a third correspondence between the user information of the users of the first network and the service content, where the third correspondence is aggregate information.

In the embodiment of the present invention, an establishing unit 401 establishes, based on analysis of access requests initiated by the users of the first network, a second correspondence between user network identities of the users of the first network and service content requested by the users of the first network, where the service content includes service content of the users of the first network, in the second network; and when user information of the users of the first network includes the user network identities, and a correspondence between the user network identities and the user information of the users of the first network is a first correspondence, an aggregating unit 402 aggregates, according to the user network identities, the first correspondence and the second correspondence that is established by the establishing unit 401 to obtain a third correspondence between the user information of the users of the first network and the service content, where the third correspondence is aggregate information. In comparison with the prior art in which information interworking between networks cannot be performed, the apparatus for information aggregation according to the embodiment of the present invention may aggregate the user information of the first network and the service content of the second network to form aggregate information, and thereby implement information interworking between the two networks.

Optionally, on a basis of the embodiment corresponding to FIG. 9, referring to 10, in another embodiment of the apparatus 40 for information aggregation according to the embodiment of the present invention, the establishing unit 401 includes:
a first acquiring subunit 4011, configured to acquire, according to the service access requests, the user network identities of the users of the first network and service identities carried in the service access requests;
a second acquiring subunit 4012, configured to acquire, according to the service identities acquired by the first acquiring subunit 4011, service content corresponding to the service identities; and
an establishing subunit 4013, configured to establish the second correspondence between the user network identities that are acquired by the first acquiring subunit 4011, of the users of the first network who initiate the service access requests, and the service content that is acquired by the second acquiring subunit 4012 and corresponding to the service identities.

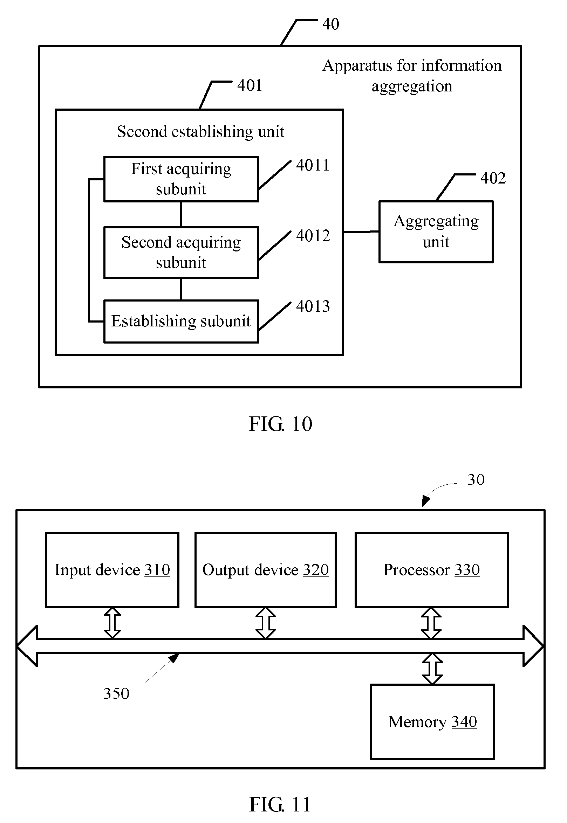

Optionally, on a basis of the embodiment corresponding to FIG. 10, in another embodiment of the apparatus 40 for information aggregation according to the embodiment of the present invention,
the establishing subunit 4013 is specifically configured to extract, from the service content, basic information of users of the second network, relationship information between the users of the second network and other users in the second network, and service information of the users of the second network, add the user network identities of the users of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the second correspondence in a form of the second network adjacency table; and
the aggregating unit 402 is specifically configured to: when the user information of the users of the first network includes basic information of the users of the first network and the relationship information between the users of the first network and other users in the first network, and the first correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the third correspondence in a form of an adjacency table.

FIG. 11 is a schematic structural diagram of an apparatus 30 for determining a target user for a service policy according to an embodiment of the present invention. The apparatus 30 for determining a target user for a service policy is used to determine the target user to which the service policy is oriented, from users of a first network, and may include an input device 310, an output device 320, a processor 330, and a memory 340.

The memory 340 may include a read-only memory and a random access memory, and provide an instruction and data for the processor 330. A part of the memory 340 may further include a non-volatile random access memory (NVRAM).

The memory 340 stores the following elements: an executable module or a data structure, or a subset thereof, or an extended set thereof:
operation instructions, including various operation instructions, used to implement various operations; and
an operating system, including various system programs, used to implement various basic services and process hardware-based tasks.

In the embodiment of the present invention, by invoking an operation instruction stored in the memory 340 (the operation instruction may be stored in the operating system), the processor 330 executes the following operations:
analyzing aggregated information according to a pre-configured service policy keyword to determine target user information corresponding to the service policy keyword, where the aggregated information includes a first correspondence between user information of the users of the first network and service content, where the service content includes service content of the users of the first network, in the second network; and
outputting the target user information by using the output device 320,
where the target user information is used to indicate the target user to which the service policy is oriented.

In comparison with the prior art in which a telecommunications operator cannot master a trend of service use of users in time, in the method for determining a target user for a service policy according to the embodiment of the present invention, aggregated information including user information of users of a first network and service content of a second network is analyzed, where the service content includes service content of the users of the first network, in the second network, and the target user to which the service policy is oriented is determined from the users of the first network, and thereby the target user to which the service policy is oriented may be determined accurately.

The processor 330 controls operations of the apparatus 30 for determining a target user for a service policy. The processor 330 may also be called a CPU (Central Processing Unit, central processing unit). The memory 340 may include a read-only memory and a random access memory, and provide an instruction and data for the processor 330. A part of the memory 340 may further include a non-volatile random access memory (NVRAM). In a specific application, components of the apparatus 30 for determining a target user for a service policy are coupled together by using a bus system 350, where the bus system 350 may further include a power bus, a control bus, a status signal bus, and the like, in addition to a data bus. However, for the purpose of clear description, various buses in the figure are all labeled the bus system 350.

The foregoing method disclosed by the embodiment of the present invention may be applied in the processor 330 or implemented by the processor 330. The processor 330 may be an integrated circuit chip, and has a signal processing capability. In an implementation process, each step of the foregoing method may be completed by using an integrated logic circuit of hardware in the processor 330 or an instruction in a form of software. The processor 330 may be a general processor, a digital signal processor (DSP), an application-specific integrated circuit (ASIC), a field programmable gate array (FPGA) or any other programmable logic device, a discrete gate or a transistor logic device, or a discrete hardware component, and may implement or execute each method, step, and logic block diagram disclosed by the embodiment of the present invention. The general processor may be a microprocessor, or the processor may be any conventional processor or the like. The steps of the method disclosed with reference to the embodiment of the present invention may be directly executed and completed by a hardware decoding processor, or executed and completed by a combination of hardware and software modules in a decoding processor. The software modules may be located in a mature storage medium in the art, such as a random access memory, a flash memory, a read-only memory, a programmable read-only memory or an erasable programmable read-only memory, or a register. The storage medium is located in the memory 340. The processor 330 reads information in the memory 340, and completes the steps of the foregoing method in combination with the hardware of the processor.

Optionally, the processor 330 is specifically configured to:
find service content that matches the service policy keyword, in the service content of the second network; and
determine, according to the first correspondence and the service content that matches the service policy keyword, that user information of users of the first network corresponding to the service policy keyword is the target user information.

Optionally, the input device 310 acquires scope information of the target user information; and the processor 330 is specifically configured to analyze, according to the service policy keyword, aggregated information in a scope indicated by the scope information, to determine the target user information that falls within the indicated scope and corresponds to the service policy keyword.

Optionally, the processor 330 is further configured to:
the user information of the users of the first network includes user network identities, and a correspondence between the user network identities and the user information of the users of the first network is a second correspondence, when the user information of the users of the first network includes user network identities, and a correspondence between the user network identities and the user information of the users of the first network is a second correspondence, aggregate the second correspondence and the third correspondence according to the user network identities to obtain the first correspondence.

Optionally, the processor 330 is specifically configured to:
acquire, according to the service access requests, the user network identities of the users of the first network and service identities carried in the service access requests;
acquire, according to the service identities, service content corresponding to the service identities; and
establish the third correspondence between the user network identities of the users of the first network who initiate the service access requests and the service content corresponding to the service identities.

Optionally, the processor 330 is specifically configured to:
extract, from the service content, basic information of users of the second network, relationship information between the users of the second network and other users in the second network, and service information of the users of the second network;
add the user network identity of each user of the first network to a first component of a second network adjacency table, add the basic information of the users of the second network to a second component of the second network adjacency table, and add the relationship information between the users of the first network and other users in the first network and the service information of the users of the second network to a third component of the second network adjacency table to establish the third correspondence in a form of the second network adjacency table; and
when the user information of the users of the first network includes basic information of the users of the first network and the relationship information between the users of the first network and other users in the first network, and the second correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the first correspondence in a form of an adjacency table.

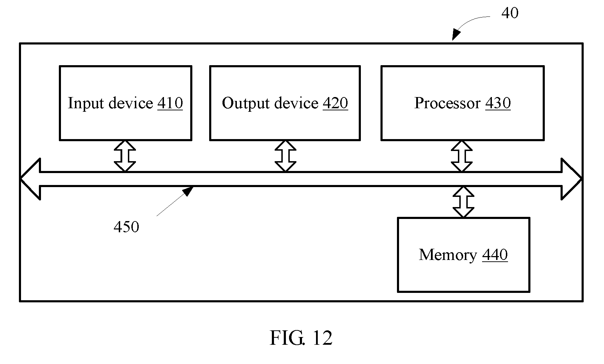

FIG. 12 is a schematic structural diagram of an apparatus 40 for information aggregation according to an embodiment of the present invention. The apparatus 40 for information aggregation may include an input device 410, an output device 420, a processor 430, and a memory 440.

The memory 440 may include a read-only memory and a random access memory, and provide an instruction and data for the processor 430. A part of the memory 440 may further include a non-volatile random access memory (NVRAM).

The memory 440 stores the following elements: an executable module or a data structure, or a subset thereof, or an extended set thereof:
operation instructions, including various operation instructions, used to implement various operations; and
an operating system, including various system programs, used to implement various basic services and process hardware-based tasks.

In the embodiment of the present invention, by invoking an operation instruction stored in the memory 440 (the operation instruction may be stored in the operating system), the processor 430 executes the following operations:
establishing, based on analysis of access requests initiated by the users of the first network, a second correspondence between user network identities of the users of the first network and service content requested by the users of the first network, where the service content includes service content of the users of the first network, in the second network; and
when user information of the users of the first network includes the user network identities, and a correspondence between the user network identities and the user information of the users of the first network is a first correspondence, aggregating the first correspondence and the second correspondence according to the user network identities to obtain a third correspondence between the user information of the users of the first network and the service content, where the third correspondence is aggregate information.

The apparatus 40 for information aggregation according to the embodiment of the present invention may aggregate the user information of the first network and the service content of the second network to form aggregate information, and thereby implement information interworking between the two networks.

The processor 430 controls operations of the apparatus 40 for information aggregation. The processor 430 may also be called a CPU (Central Processing Unit, central processing unit). The memory 440 may include a read-only memory and a random access memory, and provide an instruction and data for the processor 430. A part of the memory 440 may further include a non-volatile random access memory (NVRAM). In a specific application, components of the apparatus 40 for information aggregation are coupled together by using a bus system 450, where the bus system 450 may further include a power bus, a control bus, a status signal bus, and the like, in addition to a data bus. However, for the purpose of clear description, various buses in the figure are all labeled the bus system 450.

The foregoing method disclosed by the embodiment of the present invention may be applied in the processor 430 or implemented by the processor 430. The processor 430 may be an integrated circuit chip, and has a signal processing capability. In an implementation process, each step of the foregoing method may be completed by using an integrated logic circuit of hardware in the processor 430 or an instruction in a form of software. The processor 430 may be a general processor, a digital signal processor (DSP), an application-specific integrated circuit (ASIC), a field programmable gate array (FPGA) or any other programmable logic device, a discrete gate or a transistor logic device, or a discrete hardware component, and may implement or execute each method, step, and logic block diagram disclosed by the embodiment of the present invention. The general processor may be a microprocessor, or the processor may be any conventional processor or the like. The steps of the method disclosed with reference to the embodiment of the present invention may be directly executed and completed by a hardware decoding processor, or executed and completed by a combination of hardware and software modules in a decoding processor. The software modules may be located in a mature storage medium in the art, such as a random access memory, a flash memory, a read-only memory, a programmable read-only memory or an erasable programmable read-only memory, or a register. The storage medium is located in the memory 440. The processor 430 reads information in the memory 440, and completes the steps of the foregoing method in combination with the hardware of the processor.

Optionally, the processor 430 is specifically configured to:
acquire, according to the service access requests, the user network identities of the users of the first network and service identities carried in the service access requests;
acquire, according to the service identities, service content corresponding to the service identities; and
establish the second correspondence between the user network identities of the users of the first network who initiate the service access requests and the service content corresponding to the service identities.

Optionally, the processor 430 is specifically configured to:
extract, from the service content, basic information of users of the second network, relationship information between the users of the second network and other users in the second network, and service information of the users of the second network;
add the user network identities of the users of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the second correspondence in a form of the second network adjacency table; and
when the user information of the users of the first network includes basic information of the users of the first network and the relationship information between the users of the first network and other users in the first network, and the first correspondence is recorded in a form of a first network adjacency table, where the first network adjacency table includes a first component, a second component, and a third component, where the first component of the first network adjacency table includes the user network identities of the users of the first network, the second component of the first network adjacency table includes the basic information of the users of the first network, and the third component of the first network adjacency table includes the relationship information between the users of the first network and other users in the first network, combine, according to the user network identities, the second components and the third components of the first network adjacency table and the second network adjacency table separately to obtain the third correspondence in a form of an adjacency table.

A person of ordinary skill in the art may understand that all or some of the steps of the methods in the embodiments may be implemented by a program instructing relevant hardware (such as a processor). The program may be stored in a computer readable storage medium. The storage medium may include: a ROM, a RAM, a magnetic disk, or an optical disc.

A method for determining a target user for a service policy, a method and an apparatus for information aggregation, and a system provided by the embodiments of the present invention are described in detail above. In this specification, specific examples are used to describe the principle and implementation manners of the present invention, and the description of the embodiments is only intended to help understand the method and core idea of the present invention. Meanwhile, a person of ordinary skill in the art may, based on the idea of the present invention, make modifications with respect to the specific implementation manners and the application scope. Therefore, the content of this specification shall not be construed as a limitation to the present invention.

## Claims

1. A method for determining a target user for a service policy, wherein the method is used to determine the target user to which the service policy is oriented, from users of a first network, and the method comprises:
analyzing aggregated information according to a pre-configured service policy keyword to determine target user information corresponding to the service policy keyword, wherein the aggregated information comprises a first correspondence between user information of the users of the first network and service content, wherein the service content comprises service content of the users of the first network, in the second network; and
outputting the target user information, wherein the target user information is used to indicate the target user to which the service policy is oriented.

2. The method according to claim 1, wherein the analyzing aggregated information according to a pre-configured service policy keyword to determine target user information corresponding to the service policy keyword specifically comprises:
finding service content that matches the service policy keyword, in the service content of the second network; and
determining, according to the first correspondence and the service content that matches the service policy keyword, that user information of users of the first network corresponding to the service policy keyword is the target user information.

3. The method according to claim 1, wherein before the analyzing aggregated information according to a pre-configured service policy keyword to determine target user information corresponding to the service policy keyword, the method further comprises:
acquiring scope information of the target user information; and
the analyzing aggregated information according to a pre-configured service policy keyword to determine target user information corresponding to the service policy keyword comprises:
analyzing, according to the service policy keyword, aggregated information in a scope indicated by the scope information, to determine the target user information that falls within the indicated scope and corresponds to the service policy keyword.

4. The method according to any one of claims 1 to 3, wherein the user information of the users of the first network comprises user network identities, and a correspondence between the user network identities and the user information of the users of the first network is a second correspondence, and the method further comprises:
establishing, based on analysis of access requests initiated by the users of the first network, a third correspondence between the user network identities of the users of the first network and the service content requested by the users of the first network; and
aggregating the second correspondence and the third correspondence according to the user network identities to obtain the first correspondence.

5. The method according to claim 4, wherein the establishing, based on analysis of access requests initiated by the users of the first network, a third correspondence between the user network identities of the users of the first network and the service content requested by the users of the first network, specifically comprises:
acquiring, according to the service access requests, the user network identities of the users of the first network and service identities carried in the service access requests;
acquiring, according to the service identities, service content corresponding to the service identities; and
establishing the third correspondence between the user network identities of the users of the first network who initiate the service access requests and the service content corresponding to the service identities.

6. The method according to claim 5, wherein the user information of the users of the first network comprises basic information of the users of the first network and relationship information between the users of the first network and other users in the first network, and
the second correspondence is recorded in a form of a first network adjacency table, wherein the first network adjacency table comprises a first component, a second component, and a third component, wherein the first component of the first network adjacency table comprises the user network identities of the users of the first network, the second component of the first network adjacency table comprises the basic information of the users of the first network, and the third component of the first network adjacency table comprises the relationship information between the users of the first network and other users in the first network;
the establishing a third correspondence between the user network identities of the users of the first network and the service content requested by the users of the first network specifically comprises:
extracting, from the service content, basic information of users of the second network, relationship information between the users of the second network and other users in the second network, and service information of the users of the second network; and
adding the user network identity of each user of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the third correspondence in a form of the second network adjacency table; and
the aggregating the second correspondence and the third correspondence according to the user network identities to obtain the first correspondence specifically comprises:
combining, according to the user network identities, the second components and the third components of the first network adjacency table and the second network adjacency table separately to obtain the first correspondence in a form of an adjacency table.

7. A method for information aggregation, wherein user information of users of the first network comprises user network identities, and a correspondence between the user network identities and the user information of the users of the first network is a first correspondence, and the method comprises:
establishing, based on analysis of access requests initiated by the users of the first network, a second correspondence between the user network identities of the users of the first network and service content requested by the users of the first network, wherein the service content comprises service content of the users of the first network, in the second network; and
aggregating the first correspondence and the second correspondence according to the user network identities to obtain a third correspondence between the user information of the users of the first network and the service content, wherein the third correspondence is aggregate information.

8. The method according to claim 7, wherein the establishing, based on analysis of access requests initiated by the users of the first network, a second correspondence between the user network identities of the users of the first network and the service content requested by the users of the first network, specifically comprises:
acquiring, according to the service access requests, the user network identities of the users of the first network and service identities carried in the service access requests;
acquiring, according to the service identities, service content corresponding to the service identities; and
establishing the second correspondence between the user network identities of the users of the first network who initiate the service access requests and the service content corresponding to the service identities.

9. The method according to claim 8, wherein the user information of the users of the first network comprises basic information of the users of the first network and relationship information between the users of the first network and other users in the first network, and
the first correspondence is recorded in a form of a first network adjacency table, wherein the first network adjacency table comprises a first component, a second component, and a third component, wherein the first component of the first network adjacency table comprises the user network identities of the users of the first network, the second component of the first network adjacency table comprises the basic information of the users of the first network, and the third component of the first network adjacency table comprises the relationship information between the users of the first network and other users in the first network;
the establishing the second correspondence between the user network identities of the users of the first network who initiate the service access requests and the service content corresponding to the service identities, specifically comprises:
extracting, from the service content, basic information of users of the second network, relationship information between the users of the second network and other users in the second network, and service information of the users of the second network; and
adding the user network identities of the users of the first network to a first component of a second network adjacency table, adding the basic information of the users of the second network to a second component of the second network adjacency table, and adding the relationship information between the users of the first network and other users in the first network and the service information of the users of the second network to a third component of the second network adjacency table to establish the second correspondence in a form of the second network adjacency table; and
the aggregating the first correspondence and the second correspondence according to the user network identities to obtain a third correspondence between the user information of the users of the first network and the service content, specifically comprises:
combining, according to the user network identities, the second components and the third components of the first network adjacency table and the second network adjacency table separately to obtain the third correspondence in a form of an adjacency table.

10. An apparatus for determining a target user for a service policy, wherein the apparatus is used to determine the target user to which the service policy is oriented, from users of a first network, and the apparatus comprises:
a determining unit, configured to analyze aggregated information according to a pre-configured service policy keyword to determine target user information corresponding to the service policy keyword, wherein the aggregated information comprises a first correspondence between user information of the users of the first network and service content, wherein the service content comprises service content of the users of the first network, in the second network; and
an outputting unit, configured to output the target user information determined by the determining unit, wherein the target user information is used to indicate the target user to which the service policy is oriented.

11. The apparatus according to claim 10, wherein:
the determining unit is specifically configured to find service content that matches the service policy keyword, in the service content of the second network, and determine, according to the first correspondence and the service content that matches the service policy keyword, that user information of users of the first network corresponding to the service policy keyword is the target user information.

12. The apparatus according to claim 10, wherein the apparatus further comprises an acquiring unit, wherein:
the acquiring unit is configured to acquire scope information of the target user information; and
the determining unit is specifically configured to analyze, according to the service policy keyword, aggregated information in a scope indicated by the scope information acquired by the acquiring unit, to determine the target user information that falls within the indicated scope and corresponds to the service policy keyword.

13. The apparatus according to any one of claims 10 to 12, wherein the apparatus further comprises:
an establishing unit, configured to establish, based on analysis of access requests initiated by the users of the first network, a third correspondence between user network identities of the users of the first network and the service content requested by the users of the first network; and
an aggregating unit, configured to: when the user information of the users of the first network comprises the user network identities, and a correspondence between the user network identities and the user information of the users of the first network is a second correspondence, aggregate, according to the user network identities, the second correspondence and the third correspondence that is established by the establishing unit to obtain the first correspondence.

14. The apparatus according to claim 13, wherein the establishing unit comprises:
a first acquiring subunit, configured to acquire, according to the service access requests, the user network identities of the users of the first network and service identities carried in the service access requests;
a second acquiring subunit, configured to acquire, according to the service identities acquired by the first acquiring subunit, service content corresponding to the service identities; and
an establishing subunit, configured to establish the third correspondence between the user network identities that are acquired by the first acquiring subunit and of the users of the first network who initiate the service access requests, and the service content that is acquired by the second acquiring subunit and corresponding to the service identities.

15. The apparatus according to claim 14, wherein:
the establishing subunit is specifically configured to extract, from the service content, basic information of users of the second network, relationship information between the users of the second network and other users in the second network, and service information of the users of the second network, add the user network identity of each user of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the third correspondence in a form of the second network adjacency table; and
the aggregating unit is specifically configured to: when the user information of the users of the first network comprises basic information of the users of the first network and the relationship information between the users of the first network and other users in the first network, and the second correspondence is recorded in a form of a first network adjacency table, wherein the first network adjacency table comprises a first component, a second component, and a third component, wherein the first component of the first network adjacency table comprises the user network identities of the users of the first network, the second component of the first network adjacency table comprises the basic information of the users of the first network, and the third component of the first network adjacency table comprises the relationship information between the users of the first network and other users in the first network, combine, according to the user network identities, the second components and the third components of the first network adjacency table and the second network adjacency table separately to obtain the first correspondence in a form of an adjacency table.

16. An apparatus for information aggregation, comprising:
an establishing unit, configured to establish, based on analysis of access requests initiated by users of the first network, a second correspondence between user network identities of the users of the first network and service content requested by the users of the first network, wherein the service content comprises service content of the users of the first network, in the second network; and
an aggregating unit, configured to: when user information of the users of the first network comprises the user network identities, and a correspondence between the user network identities and the user information of the users of the first network is a first correspondence, aggregate, according to the user network identities, the first correspondence and the second correspondence that is established by the establishing unit to obtain a third correspondence between the user information of the users of the first network and the service content, wherein the third correspondence is aggregate information.

17. The apparatus according to claim 16, wherein the establishing unit comprises:
a first acquiring subunit, configured to acquire, according to the service access requests, the user network identities of the users of the first network and service identities carried in the service access requests;
a second acquiring subunit, configured to acquire, according to the service identities acquired by the first acquiring subunit, service content corresponding to the service identities; and
an establishing subunit, configured to establish the second correspondence between the user network identities that are acquired by the first acquiring subunit and of the users of the first network who initiate the service access requests, and the service content that is acquired by the second acquiring subunit and corresponding to the service identities.

18. The apparatus according to claim 17, wherein:
the establishing subunit is specifically configured to extract, from the service content, basic information of users of the second network, relationship information between the users of the second network and other users in the second network, and service information of the users of the second network, add the user network identities of the users of the first network to a first component of a second network adjacency table, add the basic information of the users of the second network to a second component of the second network adjacency table, and add relationship information between the users of the first network and other users in the first network and the service information of the users of the second network to a third component of the second network adjacency table to establish the second correspondence in a form of the second network adjacency table; and
the aggregating unit is specifically configured to: when the user information of the users of the first network comprises basic information of the users of the first network and the relationship information between the users of the first network and other users in the first network, and the first correspondence is recorded in a form of a first network adjacency table, wherein the first network adjacency table comprises a first component, a second component, and a third component, wherein the first component of the first network adjacency table comprises the user network identities of the users of the first network, the second component of the first network adjacency table comprises the basic information of the users of the first network, and the third component of the first network adjacency table comprises the relationship information between the users of the first network and other users in the first network, combining, according to the user network identities, the second components and the third components of the first network adjacency table and the second network adjacency table separately to obtain the third correspondence in a form of an adjacency table.
